# EUROPEAN PATENT APPLICATION

(11) **EP 4 678 321 A1**
(43) Date of publication of application: **14.01.2026**
(21) Application number: 23935341.0
(22) Date of filing: 27.04.2023
(51) Int. Cl.: B23H 1/10, B23H 7/02

(54) **CONTROL DEVICE, ELECTRODISCHARGE MACHINING APPARATUS, AND CONTROL METHOD**

(71) Applicant: FANUC CORPORATION, Oshino-mura Minamitsuru-gun Yamanashi 401-0597 (JP)
(72) Inventor: KASAI Hirotsugu, Minamitsuru-gun, Yamanashi 401-0597 (JP); MAKINO Yoshinori, Minamitsuru-gun, Yamanashi 401-0597 (JP); KOUDA Hisanori, Minamitsuru-gun, Yamanashi 401-0597 (JP); YAMAOKA Masahide, Minamitsuru-gun, Yamanashi 401-0597 (JP)
(74) Representative: Keil & Schaafhausen Patentanwälte PartGmbB
(86) International application number: PCT/JP2023/016691
(87) International publication number: WO 2024/224562

(57) **Abstract**

According to an embodiment of the present disclosure, a control device controls an electrodischarge machining apparatus comprising: an electrodischarge machining unit that performs electrodischarge machining on a workpiece in a machining liquid; and a filter for removing sludge contained in the machining liquid. The control device comprises: a determination unit that determines whether the workpiece comprises an aluminum-based material; and a control unit that, if the determination unit has determined that the workpiece comprises an aluminum-based material, performs control for adding, to the machining liquid, a chemical that lowers the specific resistance of the processing liquid.

## Description

### TECHNICAL FIELD

The present disclosure relates to a control device, an electrical discharge machine (electrodischarge machining apparatus), and a control method.

### BACKGROUND ART

JP 2011-020185 A discloses a control device for controlling an electrical discharge machine, and a control method for the electrical discharge machine.

### SUMMARY OF THE INVENTION

Recently, there has been a demand for a control device, an electrical discharge machine, and a control method, which are more satisfactory.

A first aspect of the present disclosure is a control device that controls an electrical discharge machine including an electrical discharge machining unit configured to perform electrical discharge machining on a workpiece in a working fluid, and a filter configured to remove sludge contained in the working fluid, the control device comprising: a determination unit configured to determine whether or not the workpiece is made of an aluminum-based material; and a control unit configured to perform control for adding a chemical agent that reduces a resistivity of the working fluid to the working fluid in a case where the determination unit determines that the workpiece is made of the aluminum-based material.

A second aspect of the present disclosure is an electrical discharge machine comprising the control device according to the first aspect.

A third aspect of the present disclosure is a control method for controlling an electrical discharge machine including an electrical discharge machining unit configured to perform electrical discharge machining on a workpiece in a working fluid, and a filter configured to remove sludge contained in the working fluid, the control method comprising: a determination step of determining whether or not the workpiece is made of an aluminum-based material; and a control step of performing control for adding a chemical agent that reduces a resistivity of the working fluid to the working fluid in a case where the workpiece is determined to be made of the aluminum-based material.

### BRIEF DESCRIPTION OF DRAWINGS

[FIG. 1] FIG. 1 is a schematic diagram of an electrical discharge machine;
[FIG. 2] FIG. 2 is a block diagram showing a configuration of a control device;
[FIG. 3] FIG. 3 is a schematic diagram of a machining information input screen;
[FIG. 4] FIG. 4 is a schematic diagram of a second inquiry screen;
[FIG. 5] FIG. 5 is a schematic diagram of a first inquiry screen;
[FIG. 6] FIG. 6 is a flowchart of a mode initial setting process;
[FIG. 7] FIG. 7 is a flowchart of a mode setting process;
[FIG. 8] FIG. 8 is a flowchart of a chemical agent addition process;
[FIG. 9] FIG. 9 is a block diagram showing a configuration of the control device;
[FIG. 10] FIG. 10 is a schematic diagram of a third inquiry screen;
[FIG. 11] FIG. 11 is a flowchart of the mode initial setting process;
[FIG. 12] FIG. 12 is a flowchart of the chemical agent addition process;
[FIG. 13] FIG. 13 is a block diagram showing a configuration of the control device;
[FIG. 14] FIG. 14 is a schematic diagram of a search screen;
[FIG. 15] FIG. 15 is a schematic diagram of a monitor screen;
[FIG. 16] FIG. 16 is a block diagram showing a configuration of the control device; and
[FIG. 17] FIG. 17 is a schematic diagram of the machining information input screen.

### DETAILED DESCRIPTION OF THE INVENTION

An electrical discharge machine performs electrical discharge machining on a workpiece in a working fluid. The working fluid that has been used in the electrical discharge machining contains sludge generated during the electrical discharge machining. The working fluid that has been used in the electrical discharge machining is reused after the sludge is removed therefrom by a filter. By filtering the working fluid, the sludge adheres to the filter.

In the case where the filter is clogged with the sludge adhering thereto and the resistance of the filter increases, the user needs to replace the filter. The used filter is usually discarded without being reused. In order to reduce the number of times of replacement of the filter and reduce the amount of discarded filters, it is required to increase the life of the filter.

In the case where the electrical discharge machine performs electrical discharge machining on a workpiece made of an aluminum-based material, the life of the filter for the electrical discharge machine is shorter than in the case where the electrical discharge machine performs electrical discharge machining on a workpiece made of an iron-based material. In the case where electrical discharge machining is performed on a workpiece made of an aluminum-based material, aluminum hydroxide is generated in the working fluid. Aluminum hydroxide has a relatively high viscosity, and it is considered that the life of the filter is shortened by adhesion of the aluminum hydroxide to the filter. The life of the filter for the electrical discharge machine in the case where electrical discharge machining is performed on a workpiece made of an aluminum-based material is 10% to 25% of the life of the filter for the electrical discharge machine in the case where electrical discharge machining is performed on a workpiece made of an iron-based material.

Therefore, in the case where electrical discharge machining is performed on a workpiece made of an aluminum-based material by the electrical discharge machine, the number of times of replacement of the filter by a user increases, and there is a problem that the amount of discarded filters increases. An object of the technique of the present disclosure is to provide a control device and a control method capable of extending the life of a filter for an electrical discharge machine in the case where electrical discharge machining is performed on an aluminum-based material.

### [First Embodiment]

### [Configuration of Electrical Discharge Machine]

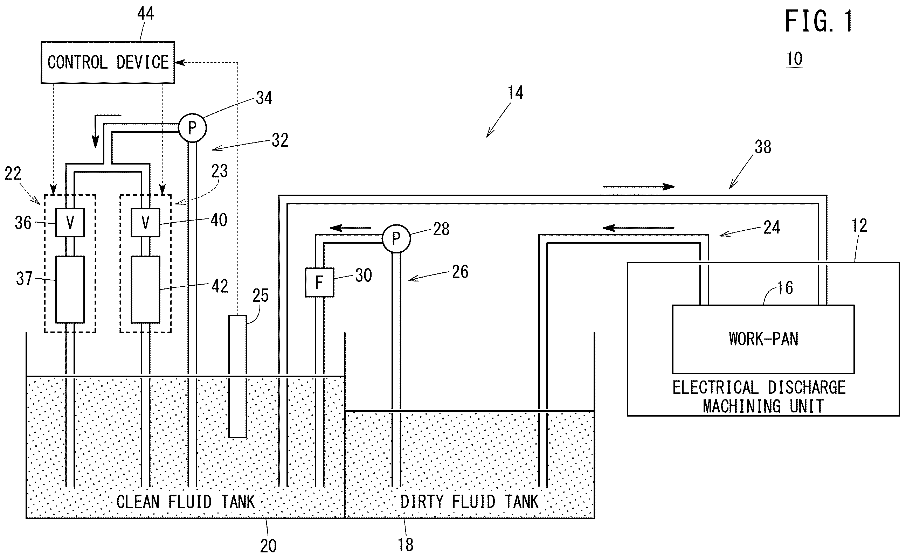

FIG. 1 is a schematic diagram of an electrical discharge machine 10. The electrical discharge machine 10 includes an electrical discharge machining unit 12, and a working fluid processing unit 14. The electrical discharge machine 10 is a wire electrical discharge machine.

The electrical discharge machining unit 12 includes a work-pan 16. The electrical discharge machining unit 12 performs electrical discharge machining on a workpiece in a working fluid stored in the work-pan 16.

The working fluid processing unit 14 includes a dirty fluid tank 18, a clean fluid tank 20, an ion exchange unit 22, an addition unit 23, and a resistivity measurement unit 25.

The working fluid that has been used in the electrical discharge machining is discharged from the work-pan 16 to the dirty fluid tank 18 through a drainage path 24. The working fluid discharged from the work-pan 16 contains sludge generated during the electrical discharge machining.

The working fluid stored in the dirty fluid tank 18 is sent to the clean fluid tank 20 through a filtration path 26. The filtration path 26 is provided with a first pump 28 and a filter 30. The first pump 28 sends the working fluid from the dirty fluid tank 18 to the clean fluid tank 20. The filter 30 filters the working fluid sent from the dirty fluid tank 18 to the clean fluid tank 20, and removes sludge from the working fluid.

The working fluid stored in the clean fluid tank 20 circulates between the clean fluid tank 20 and the ion exchange unit 22 or between the clean fluid tank 20 and the addition unit 23 through a circulation path 32. The circulation path 32 is provided with a second pump 34. The second pump 34 supplies the working fluid in the clean fluid tank 20 to the ion exchange unit 22 or the addition unit 23.

The ion exchange unit 22 includes a first valve 36 and an ion exchange resin 37. In the case where the electrical discharge machining unit 12 performs electrical discharge machining on a workpiece made of a material other than an aluminum-based material, the first valve 36 is opened and a second valve 40 described later is closed. As a result, the working fluid is supplied from the clean fluid tank 20 to the ion exchange resin 37.

The ion exchange resin 37 captures ions contained in the working fluid passing through the ion exchange resin 37, and releases hydrogen ions and hydroxide ions. The released hydrogen ions and hydroxide ions combine to form water. This increases the resistivity of the working fluid.

The addition unit 23 includes the second valve 40 and a chemical agent reservoir member 42. In the case where the electrical discharge machining unit 12 performs electrical discharge machining on a workpiece made of an aluminum-based material, the second valve 40 is opened and the first valve 36 is closed. As a result, the working fluid is supplied from the clean fluid tank 20 to the chemical agent reservoir member 42.

The chemical agent reservoir member 42 adds a chemical agent for reducing the resistivity to the working fluid passing through the chemical agent reservoir member 42. Examples of the chemical agent added to the working fluid include sodium hydrogen sulfite, sodium carbonate, sodium sulfate, calcium hydroxide, sodium disulfite (sodium pyrosulfite), potassium disulfite (potassium pyrosulfite), magnesium sulfate, and magnesium sulfate heptahydrate.

By adding the chemical agent to the working fluid, the working fluid contains at least one of the following cations. The cations are potassium ion, calcium ion, sodium ion, and magnesium ion. Further, by adding the chemical agent to the working fluid, the working fluid contains at least one of the following anions. The anions are sulfate ion, sulfite ion, disulfite ion, hydrogen sulfite ion, hydroxide ion, nitrate ion, and nitrite ion.

The resistivity measurement unit 25 measures the resistivity of the working fluid stored in the clean fluid tank 20. The ion exchange unit 22 and the addition unit 23 are controlled by a control device 44 based on the resistivity. The working fluid whose resistivity has been adjusted is sent from the clean fluid tank 20 to the work-pan 16 through a supply path 38.

### [Configuration of Control Device]

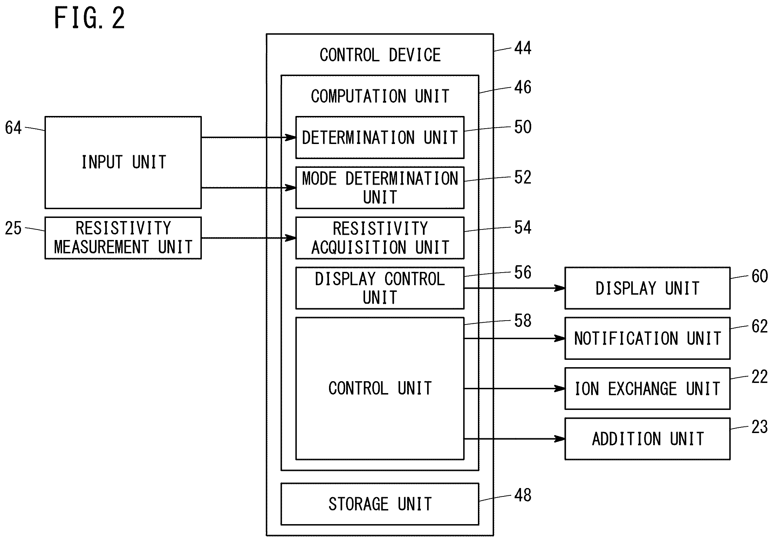

FIG. 2 is a block diagram showing a configuration of the control device 44. The control device 44 includes a computation unit 46 and a storage unit 48. The computation unit 46 is, for example, a processor such as a CPU (Central Processing Unit) or a GPU (Graphics Processing Unit). The computation unit 46 includes a determination unit 50, a mode determination unit 52, a resistivity acquisition unit 54, a display control unit 56, and a control unit 58. The determination unit 50, the mode determination unit 52, the resistivity acquisition unit 54, the display control unit 56, and the control unit 58 are realized by the computation unit 46 executing programs stored in the storage unit 48. At least part of the determination unit 50, the mode determination unit 52, the resistivity acquisition unit 54, the display control unit 56, and the control unit 58 may be realized by an integrated circuit such as an ASIC (Application Specific Integrated Circuit) or an FPGA (Field-Programmable Gate Array). At least part of the determination unit 50, the mode determination unit 52, the resistivity acquisition unit 54, the display control unit 56, and the control unit 58 may be realized by an electronic circuit including a discrete device.

The storage unit 48 is constituted by a volatile memory (not shown) and a nonvolatile memory (not shown) which are computer-readable storage media. The volatile memory is, for example, a RAM (Random Access Memory) or the like. The nonvolatile memory is, for example, a ROM (Read Only Memory), a flash memory, or the like. Data and the like are stored in, for example, the volatile memory. Programs, tables, maps, and the like are stored in, for example, the nonvolatile memory. At least a part of the storage unit 48 may be included in the processor, the integrated circuit, or the like described above. At least a part of the storage unit 48 may be mounted on a device connected to the electrical discharge machine 10 via a network.

The determination unit 50 determines whether or not a workpiece on which the electrical discharge machining unit 12 performs electrical discharge machining is made of an aluminum-based material. This determination will be described in detail later.

The mode determination unit 52 determines whether or not a life extension mode of the filter 30 is selected. The life extension mode is a mode for extending the life of the filter 30. This determination will be described in detail later.

The resistivity acquisition unit 54 acquires the resistivity of the working fluid stored in the clean fluid tank 20 from the resistivity measurement unit 25.

The display control unit 56 controls a display unit 60. A screen for performing setting related to the life extension mode and the like is displayed on the display unit 60.

The control unit 58 controls a notification unit 62. The notification unit 62 notifies the user by voice, image, light, sound, or the like. The control unit 58 controls the ion exchange unit 22 and the addition unit 23. A method for controlling the notification unit 62, the ion exchange unit 22, and the addition unit 23 will be described in detail later.

### [Experimental Results]

The inventors of the present invention conducted an experiment for determining the life of the filter 30 by performing electrical discharge machining on workpieces made of an aluminum-based material in a plurality of types of working fluids containing different ions.

It was confirmed that the life of the filter 30 was prolonged in the case where the working fluid contains at least one cation of potassium ion, calcium ion, sodium ion, and magnesium ion, and at least one anion of sulfate ion, sulfite ion, disulfite ion, hydrogen sulfite ion, hydroxide ion, nitrate ion, and nitrite ion. The working fluid containing the above-described ions has a lower resistivity than the conventional working fluid sent to the work-pan 16.

In the case where sodium hydrogen sulfite is added to the working fluid, aluminum oxide and aluminum oxide trihydrate are generated in the working fluid during electrical discharge machining of a workpiece made of an aluminum-based material. On the other hand, in the case where sodium hydrogen sulfite is not added to the working fluid, aluminum hydroxide is generated in the working fluid during electrical discharge machining of a workpiece made of an aluminum-based material. It is considered that, by adding sodium hydrogen sulfite to the working fluid, aluminum oxide and aluminum oxide trihydrate are generated instead of aluminum hydroxide that shortens the life of the filter 30.

It is considered that the generation of aluminum hydroxide is suppressed also in the case where sodium carbonate, sodium sulfate, calcium hydroxide, sodium disulfite (sodium pyrosulfite), potassium disulfite (potassium pyrosulfite), magnesium sulfate, or magnesium sulfate heptahydrate is added to the working fluid.

### [Determination Unit]

As described above, the determination unit 50 determines whether or not the workpiece on which the electrical discharge machining unit 12 performs electrical discharge machining is made of an aluminum-based material. The determination unit 50 determines whether or not the workpiece is made of an aluminum-based material based on the material of the workpiece input by the user using an input unit 64 (FIG. 2).

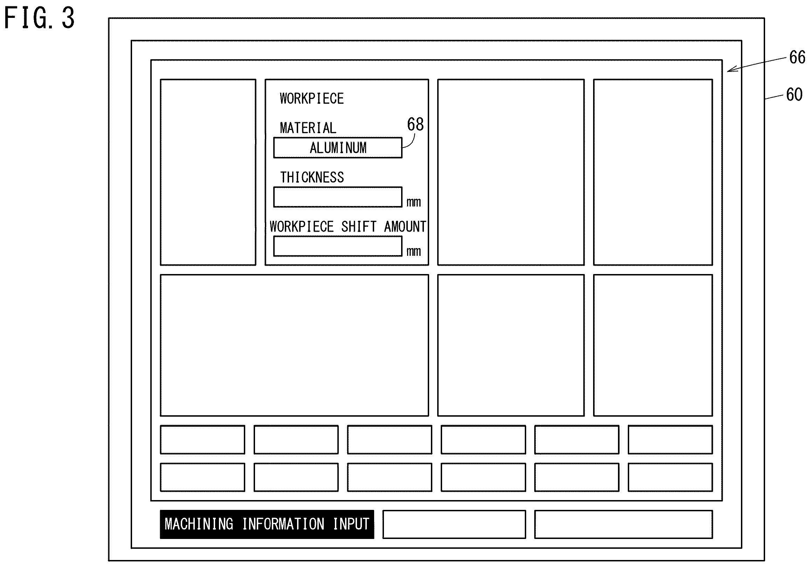

FIG. 3 is a schematic diagram of a machining information input screen 66. The machining information input screen 66 is a screen for the user to input information about the electrical discharge machining to be performed. On the machining information input screen 66, information such as the diameter of a wire electrode, the material of the wire electrode, the material of a workpiece, the thickness of the workpiece, and the shift amount (the height of the lower surface) of the workpiece is input.

As shown in FIG. 3, the machining information input screen 66 includes a material input section 68. The user inputs the material of the workpiece to the material input section 68 using the input unit 64. The determination unit 50 determines whether or not the material of the workpiece is an aluminum-based material based on the material of the workpiece input to the material input section 68.

### [Setting of Life Extension Mode]

In the case where the following three conditions are satisfied, the life extension mode is executed. The first condition is that the user selects the life extension mode. The second condition is that the determination unit 50 determines that the workpiece is made of an aluminum-based material. The third condition is that the resistivity of the working fluid is equal to or greater than a first predetermined value. By executing the life extension mode, a chemical agent is added to the working fluid. This reduces the resistivity of the working fluid. If the resistivity of the working fluid is lowered, when a workpiece made of an aluminum-based material is subjected to electrical discharge machining, aluminum hydroxide in the working fluid is suppressed and clogging of the filter 30 is suppressed. This makes it possible to extend the life of the filter 30.

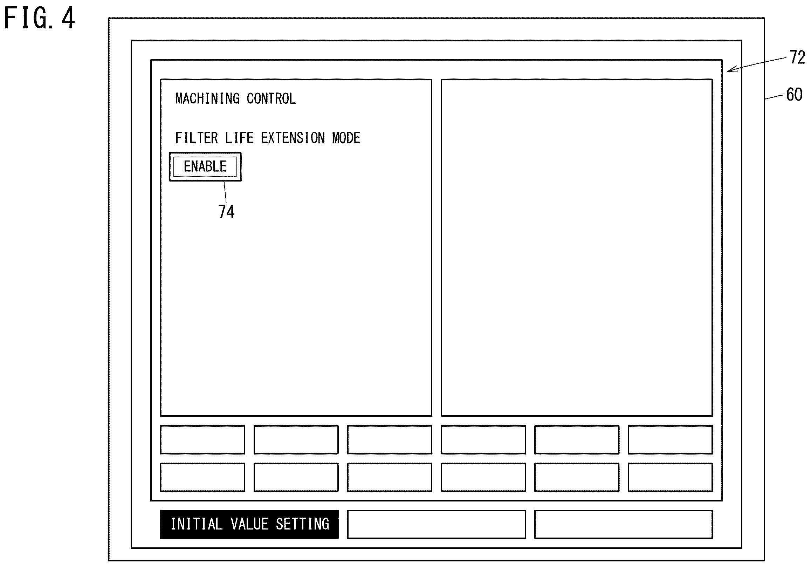

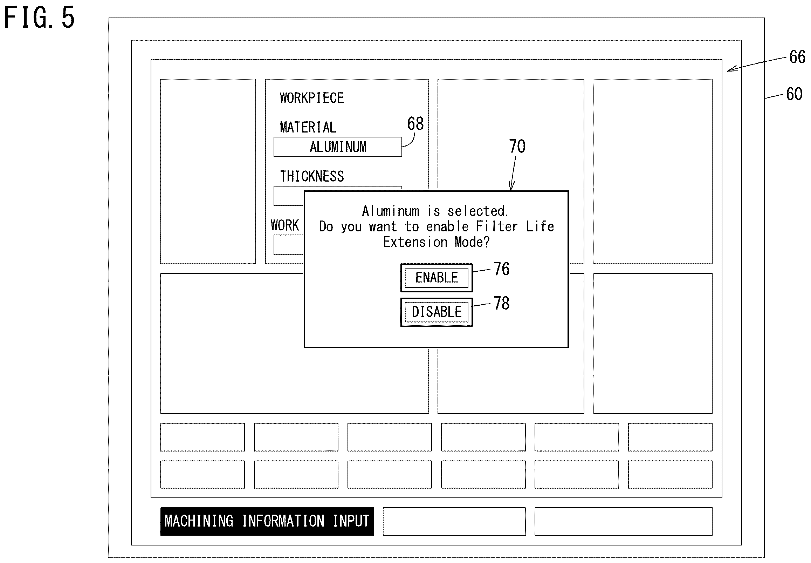

The user selects the life extension mode by operating the input unit 64 on an inquiry screen displayed on the display unit 60. The inquiry screen may be a first inquiry screen 70 as shown in FIG. 5, or may be a second inquiry screen 72 as shown in FIG. 4. The first inquiry screen 70 is a screen for inquiring of the user whether or not to select the life extension mode after the determination unit 50 determines that the workpiece is made of an aluminum-based material. The second inquiry screen 72 is a screen for inquiring of the user whether or not to select the life extension mode when an initial value of the electrical discharge machine 10 is set.

First, the second inquiry screen 72 will be described. FIG. 4 is a schematic diagram of the second inquiry screen 72. As shown in FIG. 4, an enable button 74 is displayed on the second inquiry screen 72. In the case where the user operates the enable button 74 using the input unit 64, the life extension mode is selected. In the case where the life extension mode is selected on the second inquiry screen 72, the life extension mode is automatically executed if other conditions are satisfied.

The first inquiry screen 70 will be described. FIG. 5 is a schematic diagram of the first inquiry screen 70. In the case where an aluminum-based material is input to the material input section 68 of the machining information input screen 66 shown in FIG. 3, the first inquiry screen 70 is popped up as shown in FIG. 5. It should be noted that, in the case where the life extension mode is selected on the second inquiry screen 72, the first inquiry screen 70 is not displayed.

An enable button 76 and a disable button 78 are displayed on the first inquiry screen 70. In the case where the user operates the enable button 76 using the input unit 64, the life extension mode is selected. On the other hand, in the case where the user operates the disable button 78 using the input unit 64, the life extension mode is not selected.

In the case where the life extension mode is not selected on the second inquiry screen 72, the first inquiry screen 70 is displayed when the machining information is set in the electrical discharge machine 10. Therefore, even in the case where the life extension mode is not selected when the initial value of the electrical discharge machine 10 is set, it is possible to make the user select again whether or not to select the life extension mode when the machining information is set in the electrical discharge machine 10.

### [Setting Process of Life Extension Mode]

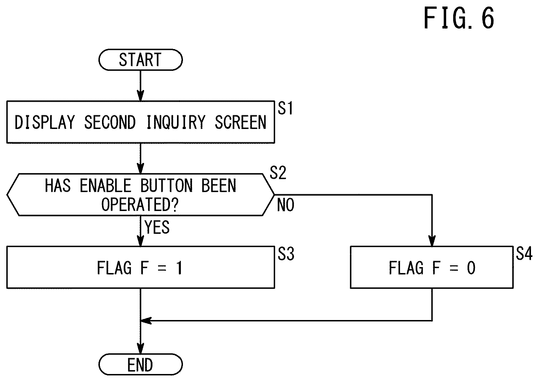

FIG. 6 is a flowchart of a mode initial setting process. The mode initial setting process is a process of setting the life extension mode to be enabled or disabled when setting an initial value of the electrical discharge machine 10. The mode initial setting process is executed, for example, in the case where the user performs an operation for setting an initial value in the electrical discharge machine 10 using the input unit 64.

In step S1, the display control unit 56 controls the display unit 60 to display the second inquiry screen 72 on the display unit 60. Thereafter, the process proceeds to step S2.

In step S2, the control unit 58 determines whether or not the enable button 74 has been operated by the user. In the case where the enable button 74 has been operated, the process proceeds to step S3, and in the case where the enable button 74 has not been operated, the process proceeds to step S4.

In step S3, the control unit 58 sets a flag F, which indicates whether or not the life extension mode has been selected, to "1". Thereafter, the mode initial setting process is ended.

In step S4, the control unit 58 sets the flag F to "0". Thereafter, the mode initial setting process is ended.

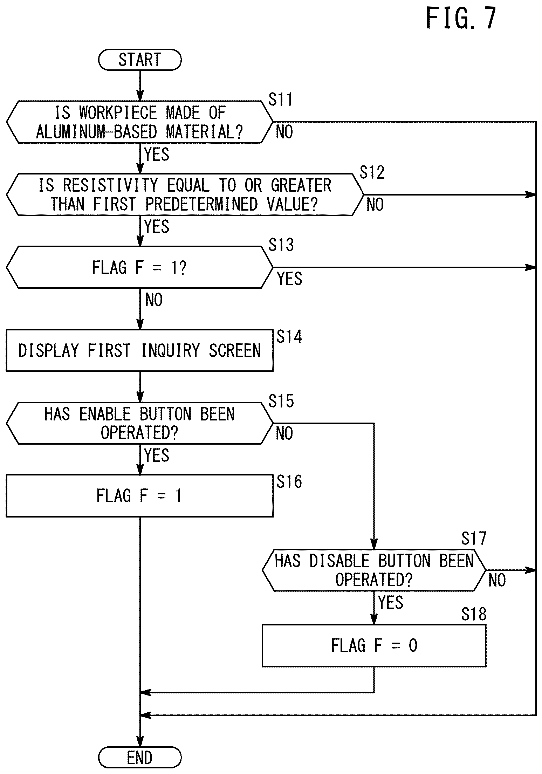

FIG. 7 is a flowchart of a mode setting process. The mode setting process is a process of setting the life extension mode to be enabled or disabled when setting the electrical discharge machining information of the electrical discharge machine 10. The mode setting process is executed, for example, in the case where the user performs an operation for setting the machining information in the electrical discharge machine 10 using the input unit 64.

In step S11, the determination unit 50 determines whether or not the workpiece is made of an aluminum-based material. In the case where the workpiece is made of an aluminum-based material, the process proceeds to step S12. In the case where the workpiece is made of a material other than the aluminum-based material, the mode setting process is ended.

In step S12, the control unit 58 determines whether or not the resistivity of the working fluid is equal to or greater than the first predetermined value. In the case where the resistivity is equal to or greater than the first predetermined value, the process proceeds to step S13. In the case where the resistivity is less than the first predetermined value, the mode setting process is ended.

In step S13, the mode determination unit 52 determines whether or not a flag F, which indicates whether or not the life extension mode has been selected, is "1". In the case where the flag F is "1", the mode setting process is ended. In the case where the flag F is not "1", the process proceeds to step S14.

In step S14, the display control unit 56 controls the display unit 60 to display the first inquiry screen 70 on the display unit 60. Thereafter, the process proceeds to step S15.

In step S15, the control unit 58 determines whether or not the enable button 76 has been operated by the user. In the case where the enable button 76 has been operated, the process proceeds to step S16, and in the case where the enable button 76 has not been operated, the process proceeds to step S17.

In step S16, the control unit 58 sets the flag F to "1". Thereafter, the mode setting process is ended.

In step S17, the control unit 58 determines whether or not the disable button 78 has been operated by the user. In the case where the disable button 78 has been operated, the process proceeds to step S18, and in the case where the disable button 78 has not been operated, the mode setting process is ended.

In step S18, the control unit 58 sets the flag F to "0". Thereafter, the mode setting process is ended.

### [Chemical Agent Addition Process]

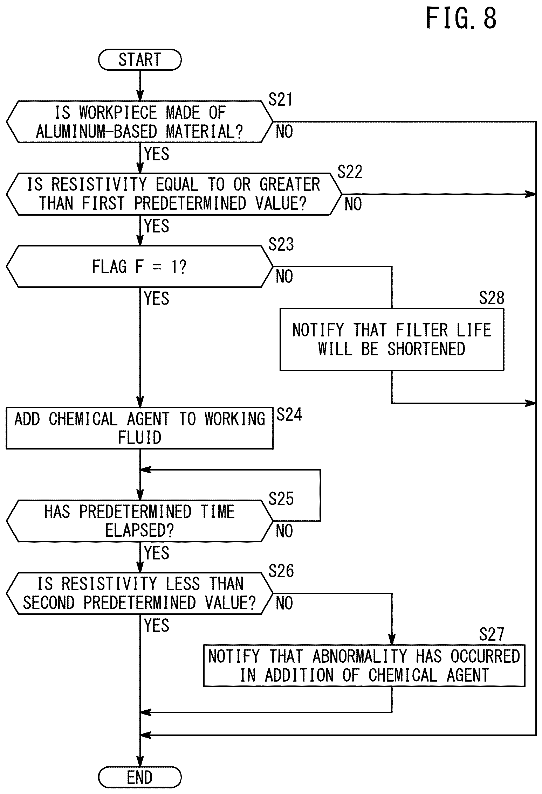

FIG. 8 is a flowchart of a chemical agent addition process. The chemical agent addition process is a process of adding a chemical agent to the working fluid by the addition unit 23.

In step S21, the determination unit 50 determines whether or not the workpiece is made of an aluminum-based material. In the case where the workpiece is made of an aluminum-based material, the process proceeds to step S22. In the case where the workpiece is made of a material other than the aluminum-based material, the chemical agent addition process is ended.

In step S22, the control unit 58 determines whether or not the resistivity of the working fluid is equal to or greater than the first predetermined value. In the case where the resistivity is equal to or greater than the first predetermined value, the process proceeds to step S23. In the case where the resistivity is less than the first predetermined value, the chemical agent addition process is ended.

In step S23, the mode determination unit 52 determines whether or not a flag F, which indicates that the life extension mode has been selected, is "1". In the case where the mode determination unit 52 determines that the flag F is "1", the process proceeds to step S24.

In step S24, the control unit 58 controls the addition unit 23 to add a chemical agent to the working fluid. Thereafter, the process proceeds to step S25.

In step S25, the control unit 58 determines whether or not a predetermined time has elapsed from a time point at which the chemical agent is added to the working fluid. In the case where the predetermined time has elapsed, the process proceeds to step S26. In the case where the predetermined time has not elapsed, the process of step S25 is repeated.

In step S26, the control unit 58 determines whether or not the resistivity of the working fluid is less than a second predetermined value. In the case where the resistivity is less than the second predetermined value, the chemical agent addition process is ended. In the case where the resistivity is equal to or greater than the second predetermined value, the process proceeds to step S27. The second predetermined value may be the same value as the first predetermined value. The second predetermined value may be a value smaller than the first predetermined value.

In step S27, the control unit 58 controls the notification unit 62 to notify the user of an abnormality of addition of the chemical agent. By being notified by the notification unit 62, the user performs the following work, for example. The work includes checking the remaining amount of the chemical agent in the chemical agent reservoir member 42 of the addition unit 23, checking a failure of the first valve 36 of the ion exchange unit 22, checking a failure of the second valve 40 of the addition unit 23, and the like. In the case where the resistivity of the working fluid is equal to or greater than the second predetermined value, the electrical discharge machining is not performed on the workpiece.

In step S23, in the case where the mode determination unit 52 determines that the flag F is not "1", the process proceeds to step S28. In step S28, the control unit 58 controls the notification unit 62 to notify the user that the life of the filter 30 will be shortened. Thereafter, the chemical agent addition process is ended.

### [Second Embodiment]

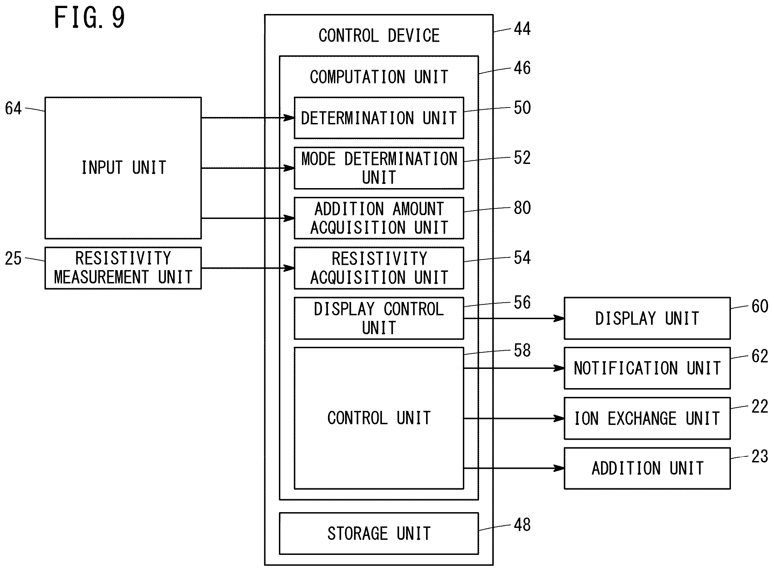

FIG. 9 is a block diagram showing a configuration of the control device 44. The control device 44 of the present embodiment is provided with an addition amount acquisition unit 80 in the computation unit 46, in addition to the configuration of the control device 44 of the first embodiment. The addition amount acquisition unit 80 acquires information indicating an addition amount of a chemical agent designated by the user.

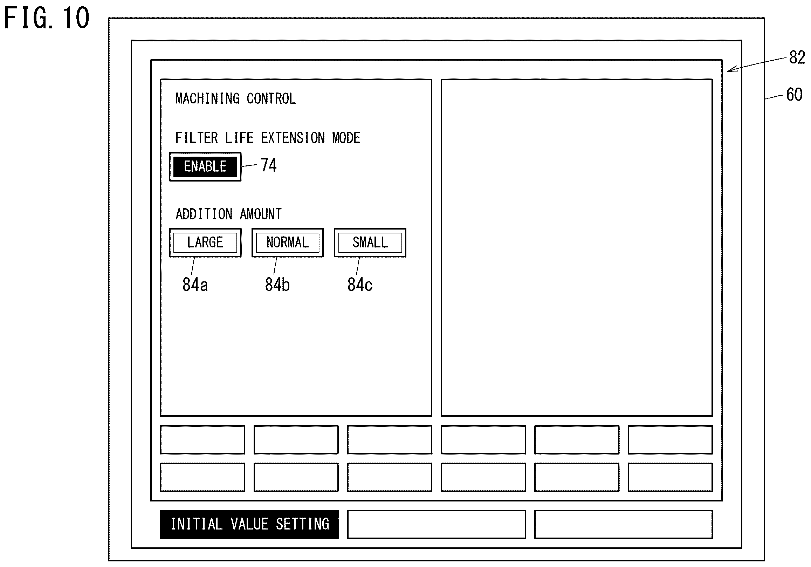

FIG. 10 is a schematic diagram of a third inquiry screen 82. The third inquiry screen 82 is a screen for inquiring of the user about the addition amount of the chemical agent. The third inquiry screen 82 is displayed in the case where the enable button 74 has been operated on the second inquiry screen 72 (FIG. 4).

As shown in FIG. 10, three addition amount buttons 84a to 84c are displayed on the third inquiry screen 82. The user can operate one of the addition amount buttons 84a to 84c using the input unit 64. The addition amount acquisition unit 80 acquires addition amount information indicating an addition amount corresponding to the button that has been operated among the addition amount buttons 84a to 84c.

The control unit 58 controls the addition unit 23 to add, to the working fluid, the chemical agent in an amount corresponding to the addition amount information acquired by the addition amount acquisition unit 80. Accordingly, in the case where the chemical agent is added to the working fluid by the addition unit 23, the chemical agent can be added in an amount desired by the user. The control unit 58 may set the first predetermined value and the second predetermined value described above based on the addition amount information acquired by the addition amount acquisition unit 80.

In the example shown in FIG. 10, the characters "Large", "Normal", and "Small" are displayed on the addition amount buttons 84a to 84c, respectively, but the weight (g) of the chemical agent to be added may be displayed. The ratio (ppm) of the weight of the added chemical agent to the weight of the working fluid may be displayed. A target value (Ωm) of the resistivity of the working fluid after the chemical agent is added thereto may be displayed.

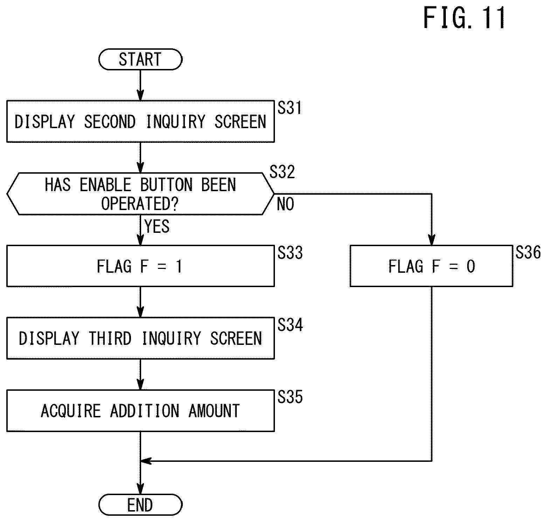

The third inquiry screen 82 is displayed on the display unit 60 during the execution of the mode initial setting process. FIG. 11 is a flowchart of the mode initial setting process.

In step S31, the display control unit 56 controls the display unit 60 to display the second inquiry screen 72 on the display unit 60. Thereafter, the process proceeds to step S32.

In step S32, the control unit 58 determines whether or not the enable button 74 of the second inquiry screen 72 (FIG. 4) has been operated by the user. In the case where the enable button 74 has been operated, the process proceeds to step S33, and in the case where the enable button 74 has not been operated, the process proceeds to step S36.

In step S33, the control unit 58 sets a flag F, which indicates that the life extension mode has been selected, to "1". Thereafter, the process proceeds to step S34.

In step S34, the display control unit 56 controls the display unit 60 to display the third inquiry screen 82 on the display unit 60. Thereafter, the process proceeds to step S35.

In step S35, the addition amount acquisition unit 80 acquires information indicating an addition amount corresponding to the button that has been operated among the addition amount buttons 84a to 84c of the third inquiry screen 82 (FIG. 10). Thereafter, the mode initial setting process is ended.

In step S36, the control unit 58 sets the flag F to "0". Thereafter, the mode initial setting process is ended.

### [Third Embodiment]

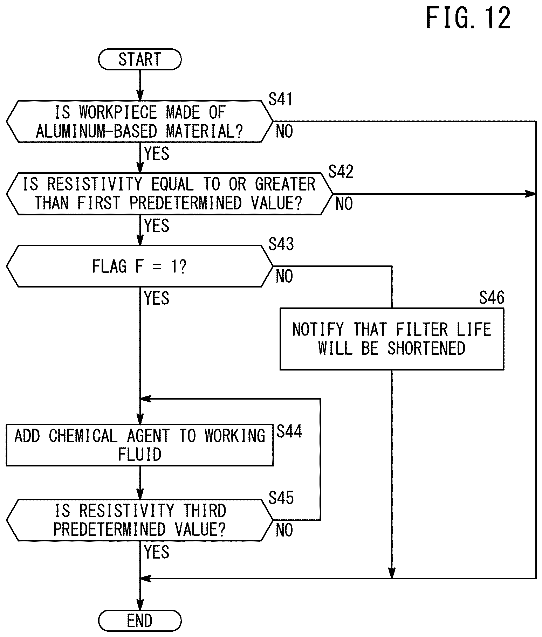

The chemical agent addition process of the present embodiment is partially different from the chemical agent addition process of the first embodiment. FIG. 12 is a flowchart of the chemical agent addition process.

In step S41, the determination unit 50 determines whether or not the workpiece is made of an aluminum-based material. In the case where the workpiece is made of an aluminum-based material, the process proceeds to step S42. In the case where the workpiece is made of a material other than the aluminum-based material, the chemical agent addition process is ended.

In step S42, the control unit 58 determines whether or not the resistivity of the working fluid is equal to or greater than the first predetermined value. In the case where the resistivity is equal to or greater than the first predetermined value, the process proceeds to step S43. In the case where the resistivity is less than the first predetermined value, the chemical agent addition process is ended.

In step S43, the mode determination unit 52 determines whether or not a flag F, which indicates that the life extension mode has been selected, is "1". In the case where the mode determination unit 52 determines that the flag F is "1", the process proceeds to step S44.

In step S44, the control unit 58 controls the addition unit 23 to add a chemical agent to the working fluid. Thereafter, the process proceeds to step S45.

In step S45, the control unit 58 determines whether or not the resistivity of the working fluid is a third predetermined value. In the case where the resistivity is the third predetermined value, the chemical agent addition process is ended. In the case where the resistivity is not the third predetermined value, the process returns to step S44. The third predetermined value may be the same value as the first predetermined value. The third predetermined value may be a value smaller than the first predetermined value.

In step S43, in the case where the mode determination unit 52 determines that the flag F is not "1", the process proceeds to step S46. In step S46, the control unit 58 controls the notification unit 62 to notify the user that the life of the filter 30 will be shortened. Thereafter, the chemical agent addition process is ended.

### [Fourth Embodiment]

In the present embodiment, the determination unit 50 determines whether or not the material of the workpiece is an aluminum-based material based on a machining program executed in the control device 44.

The material of a workpiece to be subjected to electrical discharge machining based on a machining program may be described as a comment in the machining program. The determination unit 50 determines whether or not the material of the workpiece is an aluminum-based material based on the description of the comment in the machining program.

The determination unit 50 may determine whether or not the material of the workpiece is an aluminum-based material based on a macro executed in the control device 44.

In the case where a macro is executed, the material of a workpiece on which the electrical discharge machining is being performed may also be described as a comment in the macro. The determination unit 50 determines whether or not the material of the workpiece is an aluminum-based material based on the description of the comment in the macro.

### [Fifth Embodiment]

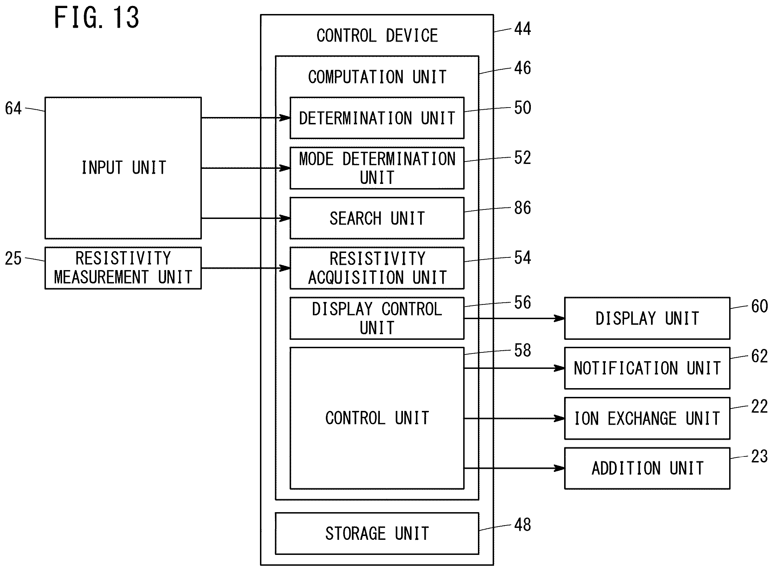

FIG. 13 is a block diagram showing a configuration of the control device 44. The control device 44 of the present embodiment is provided with a search unit 86 in the computation unit 46, in addition to the configuration of the control device 44 of the first embodiment. A plurality of machining conditions are stored in advance in the control device 44, and the search unit 86 searches for a machining condition corresponding to a search condition.

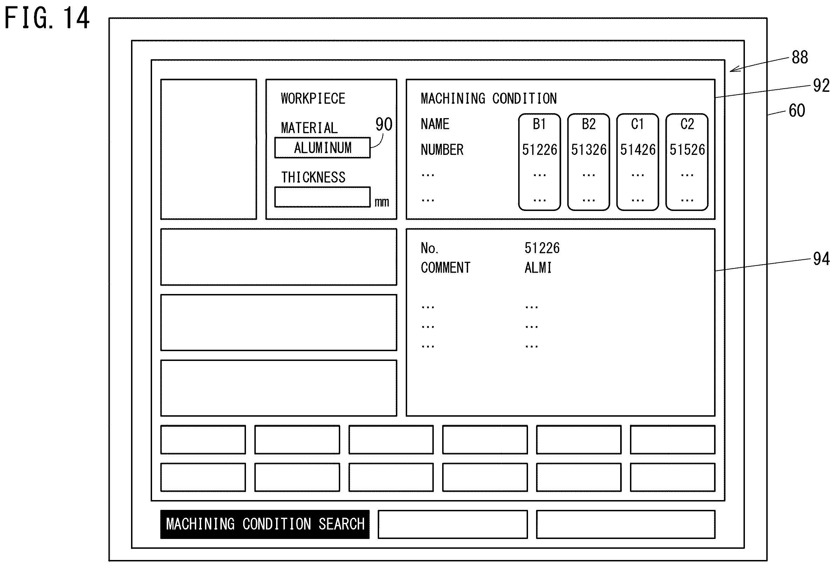

FIG. 14 is a schematic diagram of a search screen 88. The search screen 88 is a screen on which the user inputs a search condition and a search result obtained by a search based on the input search condition is displayed. As shown in FIG. 14, the search screen 88 includes a material input section 90, a search result display section 92, and a machining condition display section 94.

The user uses the input unit 64 to input the material of the workpiece to the material input section 90 as a search condition. The determination unit 50 determines whether or not the material of the workpiece is an aluminum-based material based on the material of the workpiece, which is the search condition.

A list of machining conditions corresponding to the search condition is displayed on the search result display section 92. The details of the machining condition selected by the user from the list of the machining conditions displayed on the search result display section 92 are displayed on the machining condition display section 94.

### [Sixth Embodiment]

In the present embodiment, the determination unit 50 determines whether or not the material of the workpiece is an aluminum-based material based on the machining condition set in the electrical discharge machine 10.

As shown in FIG. 14, a unique number is assigned to each machining condition. There is a case that the machining condition corresponds to the material of the workpiece to be subjected to the electrical discharge machining based on this machining condition. In this case, if the machining condition that is set in the electrical discharge machine 10 is specified, it may be determined whether or not the material of the workpiece to be subjected to electrical discharge machining is an aluminum-based material based on the specified machining condition.

As illustrated in FIG. 14, there is a case that, in the machining condition, the material of a workpiece to be subjected to the electrical discharge machining based on this machining condition is described as a comment. In this case, the determination unit 50 determines whether or not the material of the workpiece is an aluminum-based material based on the description of the comment in the machining condition that is set in the electrical discharge machine 10.

### [Seventh Embodiment]

In the present embodiment, the display control unit 56 controls the display unit 60 to display a monitor screen 96 on the display unit 60.

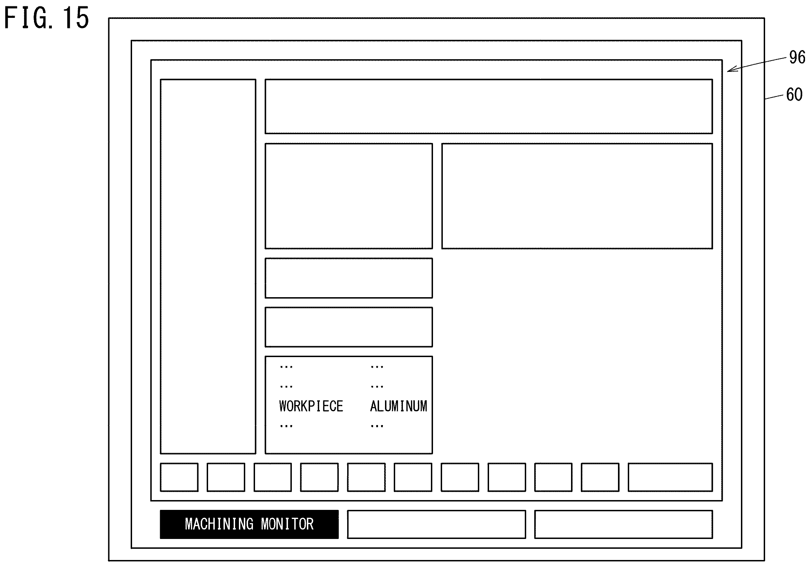

FIG. 15 is a schematic diagram of the monitor screen 96. Information about the electrical discharge machine 10 during machining is displayed on the monitor screen 96. As shown in FIG. 15, information about the material of a workpiece is displayed as the information about the electrical discharge machine 10.

The determination unit 50 determines whether or not the material of the workpiece is an aluminum-based material based on the information about the material of the workpiece that is being machined, which is displayed on the display unit 60.

### [Eighth Embodiment]

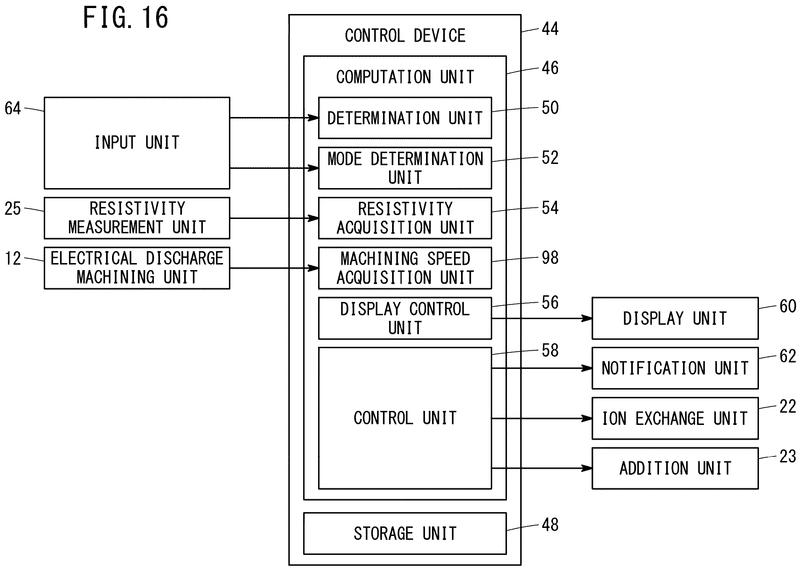

FIG. 16 is a block diagram showing a configuration of the control device 44. The control device 44 of the present embodiment is provided with a machining speed acquisition unit 98 in the computation unit 46, in addition to the configuration of the control device 44 of the first embodiment. The machining speed acquisition unit 98 acquires information indicating a machining speed from the electrical discharge machining unit 12.

In the electrical discharge machining, the machining speed changes depending on the material of the workpiece. The material of the workpiece can be estimated from the machining speed. The determination unit 50 determines whether or not the material of the workpiece is an aluminum-based material based on the machining speed.

### [Ninth Embodiment]

In the present embodiment, when the material of a workpiece is input on the machining information input screen 66, a target value of the resistivity of the working fluid is automatically input.

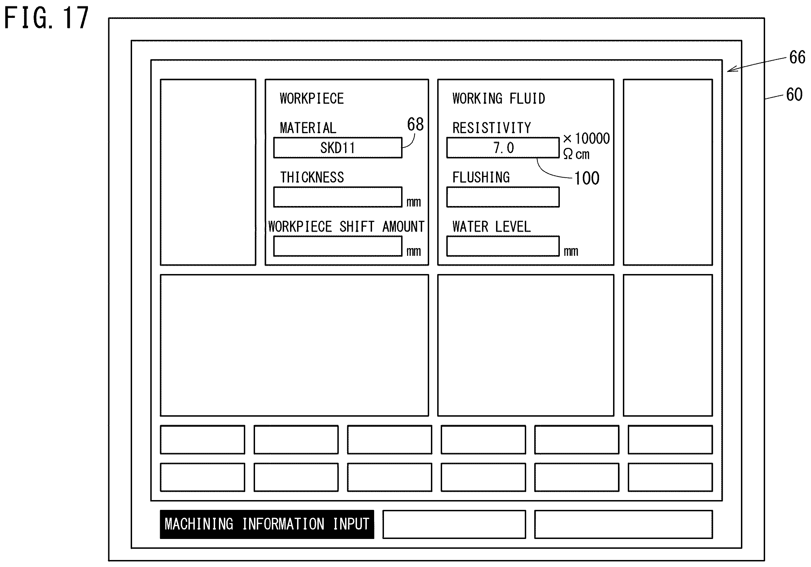

FIG. 17 is a schematic diagram of the machining information input screen 66. As shown in FIG. 17, the machining information input screen 66 includes the material input section 68 and a resistivity input section 100. The user inputs the material of the workpiece to the material input section 68 using the input unit 64. A target value of the resistivity of the working fluid is automatically input to the resistivity input section 100.

In the case where the user inputs, for example, "SKD11" to the material input section 68, "7.0", for example, is automatically input to the resistivity input section 100. In the case where the user inputs, for example, "tungsten carbide" to the material input section 68, "10.0", for example, is automatically input to the resistivity input section 100. In the case where the user inputs, for example, "aluminum" to the material input section 68, "2.5", for example, is automatically input to the resistivity input section 100.

### [Modified Embodiment]

In the above embodiments, the case where the addition unit 23 is controlled to add a chemical agent to the working fluid has been described as an example, but the present disclosure is not limited thereto. For example, the chemical agent may be added to the working fluid by the user. In this case, the control unit 58 may perform control for causing the user to add the chemical agent. For example, the control unit 58 may use the display control unit 56 to display a screen for instructing the user to add the chemical agent on the display unit 60. Further, the control unit 58 may use the notification unit 62 to produce a voice for instructing the user to add the chemical agent.

According to the control device 44, the electrical discharge machine 10, and the control method of the present disclosure, in the case where the determination unit 50 determines that the workpiece is made of an aluminum-based material, the chemical agent for reducing the resistivity of the working fluid is added to the working fluid. If the agent for reducing the resistivity of the working fluid is added to the working fluid, the generation of aluminum hydroxide in the working fluid can be suppressed when the electrical discharge machining is performed on a workpiece made of an aluminum-based material. This suppresses clogging of the filter 30, and can extend the life of the filter 30.

The following supplementary notes are further disclosed in relation to the above-described embodiments.

### (Supplementary Note 1)

Provided is the control device (44) that controls the electrical discharge machine (10) including the electrical discharge machining unit (12) configured to perform electrical discharge machining on a workpiece in the working fluid, and the filter (30) configured to remove sludge contained in the working fluid, the control device including: the determination unit (50) configured to determine whether or not the workpiece is made of an aluminum-based material; and the control unit (58) configured to perform control for adding the chemical agent that reduces the resistivity of the working fluid to the working fluid in the case where the determination unit determines that the workpiece is made of the aluminum-based material.

### (Supplementary Note 2)

The control device according to Supplementary Note 1 may further include the resistivity acquisition unit (54) configured to acquire the resistivity of the working fluid, wherein, in the case where the workpiece is determined to be made of the aluminum-based material and the resistivity of the working fluid is equal to or greater than a first predetermined value, the control unit may perform the control for adding the chemical agent to the working fluid.

### (Supplementary Note 3)

The control device according to Supplementary Note 1 may further include the resistivity acquisition unit configured to acquire the resistivity of the working fluid, wherein, in the case where the resistivity does not become less than a second predetermined value within a predetermined time from a time point at which the chemical agent is added to the working fluid, the control unit may control the notification unit (62) to issue a notification to the user.

### (Supplementary Note 4)

The control device according to any one of Supplementary Notes 1 to 3 may further include the mode determination unit (52) configured to determine whether or not the life extension mode that is a mode for extending the life of the filter has been selected by the user, wherein, in the case where the life extension mode has been selected and the workpiece is determined to be made of the aluminum-based material, the control unit may perform the control for adding the chemical agent to the working fluid.

### (Supplementary Note 5)

In the control device according to Supplementary Note 4, in the case where the life extension mode has not been selected although the workpiece is determined to be made of the aluminum-based material, the control unit may control the notification unit to issue a notification to the user.

### (Supplementary Note 6)

The control device according to any one of Supplementary Notes 1 to 5 may further include the addition amount acquisition unit (80) configured to acquire information indicating the addition amount of the chemical agent, the addition amount being designated by the user, wherein, in the case where the chemical agent is added to the working fluid, the control unit may perform control for adding, to the working fluid, the chemical agent with the addition amount that has been designated.

### (Supplementary Note 7)

In the control device according to any one of Supplementary Notes 1 to 5, in the case where the workpiece is determined to be made of the aluminum-based material, the control unit may set the target value of the resistivity to a third predetermined value, and perform the control for adding the chemical agent to the working fluid until the resistivity reaches the third predetermined value.

### (Supplementary Note 8)

The control device according to any one of Supplementary Notes 1 to 7 may further include the addition unit (23) configured to add the chemical agent to the working fluid, wherein the control unit may control the addition unit to add the chemical agent to the working fluid.

### (Supplementary Note 9)

In the control device according to any one of Supplementary Notes 1 to 8, the determination unit may determine whether or not the workpiece is made of the aluminum-based material based on the material of the workpiece that is input by the user or based on the machining condition that is set.

### (Supplementary Note 10)

In the control device according to any one of Supplementary Notes 1 to 8, the determination unit may determine whether or not the workpiece is made of the aluminum-based material based on the machining program executed in the control device or the macro executed in the control device.

### (Supplementary Note 11)

The control device according to any one of Supplementary Notes 1 to 8 may further include the search unit (86) configured to search for the machining condition corresponding to the search condition, wherein the determination unit may determine whether or not the workpiece is made of the aluminum-based material based on the search condition.

### (Supplementary Note 12)

The control device according to any one of Supplementary Notes 1 to 8 may further include the display control unit (56) configured to display, on the display unit (60), information about the material of the workpiece that is being machined, wherein the determination unit may determine whether or not the workpiece is made of the aluminum-based material based on the information displayed on the display unit.

### (Supplementary Note 13)

The control device according to any one of Supplementary Notes 1 to 8 may further include the machining speed acquisition unit (98) configured to acquire information indicating the machining speed during the electrical discharge machining of the workpiece, wherein the determination unit may determine whether or not the workpiece is made of the aluminum-based material based on the machining speed.

### (Supplementary Note 14)

The electrical discharge machine includes the control device according to any one of Supplementary Notes 1 to 13.

### (Supplementary Note 15)

Provided is the control method for controlling the electrical discharge machine including the electrical discharge machining unit configured to perform electrical discharge machining on a workpiece in the working fluid, and the filter configured to remove sludge contained in the working fluid, the control method including: the determination step of determining whether or not the workpiece is made of an aluminum-based material; and the control step of performing control for adding the chemical agent that reduces the resistivity of the working fluid to the working fluid in the case where the workpiece is determined to be made of the aluminum-based material.

Although the present disclosure has been described in detail, the present disclosure is not limited to the above-described individual embodiments. Various additions, replacements, modifications, partial deletions, and the like can be made to these embodiments without departing from the essence and gist of the present disclosure, or without departing from the idea and purpose of the present disclosure derived from the claims and equivalents thereof. Further, these embodiments can also be implemented in combination. For example, in the above-described embodiments, the order of operations and the order of processes are shown as examples, and are not limited to these. Furthermore, the same applies to a case where numerical values or mathematical expressions are used in the description of the above-described embodiments.

### REFERENCE SIGNS LIST

- 10:: electrical discharge machine
- 12:: electrical discharge machining unit
- 23:: addition unit
- 30:: filter
- 44:: control device
- 50:: determination unit
- 52:: mode determination unit
- 54:: resistivity acquisition unit
- 56:: display control unit
- 58:: control unit
- 60:: display unit
- 62:: notification unit
- 80:: addition amount acquisition unit
- 86:: search unit

## Claims

1. A control device that controls an electrical discharge machine including an electrical discharge machining unit configured to perform electrical discharge machining on a workpiece in a working fluid, and a filter configured to remove sludge contained in the working fluid, the control device comprising:
a determination unit configured to determine whether or not the workpiece is made of an aluminum-based material; and
a control unit configured to perform control for adding a chemical agent that reduces a resistivity of the working fluid to the working fluid in a case where the determination unit determines that the workpiece is made of the aluminum-based material.

2. The control device according to claim 1, further comprising
a resistivity acquisition unit configured to acquire the resistivity of the working fluid, wherein
in a case where the workpiece is determined to be made of the aluminum-based material and the resistivity of the working fluid is equal to or greater than a first predetermined value, the control unit performs the control for adding the chemical agent to the working fluid.

3. The control device according to claim 1, further comprising
a resistivity acquisition unit configured to acquire the resistivity of the working fluid, wherein
in a case where the resistivity does not become less than a second predetermined value within a predetermined time from a time point at which the chemical agent is added to the working fluid, the control unit controls a notification unit to issue a notification to a user.

4. The control device according to any one of claims 1 to 3, further comprising
a mode determination unit configured to determine whether or not a life extension mode that is a mode for extending a life of the filter has been selected by a user, wherein
in a case where the life extension mode has been selected and the workpiece is determined to be made of the aluminum-based material, the control unit performs the control for adding the chemical agent to the working fluid.

5. The control device according to claim 4, wherein
in a case where the life extension mode has not been selected although the workpiece is determined to be made of the aluminum-based material, the control unit controls a notification unit to issue a notification to a user.

6. The control device according to any one of claims 1 to 5, further comprising
an addition amount acquisition unit configured to acquire information indicating an addition amount of the chemical agent, the addition amount being designated by a user, wherein
in a case where the chemical agent is added to the working fluid, the control unit performs control for adding, to the working fluid, the chemical agent with the addition amount that has been designated.

7. The control device according to any one of claims 1 to 5, wherein
in the case where the workpiece is determined to be made of the aluminum-based material, the control unit sets a target value of the resistivity to a third predetermined value, and performs the control for adding the chemical agent to the working fluid until the resistivity reaches the third predetermined value.

8. The control device according to any one of claims 1 to 7, further comprising
an addition unit configured to add the chemical agent to the working fluid, wherein
the control unit controls the addition unit to add the chemical agent to the working fluid.

9. The control device according to any one of claims 1 to 8, wherein
the determination unit determines whether or not the workpiece is made of the aluminum-based material based on a material of the workpiece that is input by a user or based on a machining condition that is set.

10. The control device according to any one of claims 1 to 8, wherein
the determination unit determines whether or not the workpiece is made of the aluminum-based material based on a machining program executed in the control device or a macro executed in the control device.

11. The control device according to any one of claims 1 to 8, further comprising
a search unit configured to search for a machining condition corresponding to a search condition, wherein
the determination unit determines whether or not the workpiece is made of the aluminum-based material based on the search condition.

12. The control device according to any one of claims 1 to 8, further comprising
a display control unit configured to display, on a display unit, information about a material of the workpiece that is being machined, wherein
the determination unit determines whether or not the workpiece is made of the aluminum-based material based on the information displayed on the display unit.

13. The control device according to any one of claims 1 to 8, further comprising
a machining speed acquisition unit configured to acquire information indicating a machining speed during the electrical discharge machining of the workpiece, wherein
the determination unit determines whether or not the workpiece is made of the aluminum-based material based on the machining speed.

14. An electrical discharge machine comprising the control device according to any one of claims 1 to 13.

15. A control method for controlling an electrical discharge machine including an electrical discharge machining unit configured to perform electrical discharge machining on a workpiece in a working fluid, and a filter configured to remove sludge contained in the working fluid, the control method comprising:
a determination step of determining whether or not the workpiece is made of an aluminum-based material; and
a control step of performing control for adding a chemical agent that reduces a resistivity of the working fluid to the working fluid in a case where the workpiece is determined to be made of the aluminum-based material.
